# EUROPÄISCHE PATENTSCHRIFT

(11) **EP 1 551 325 B1**
(45) Veröffentlichungstag und Bekanntmachung des Hinweises auf die Patenterteilung: **11.01.2006**
(21) Anmeldenummer: 03747953.2
(22) Anmeldetag: 03.09.2003
(51) Int. Cl.: A61C 5/12

(54) **ZAHNÄRZTLICHER MATRIZENSPANNER**
DENTAL MATRIX RETAINER
MECHANISME DE SERRAGE DE MATRICE DENTAIRE

(30) Priorität: 04.09.2002 DE 10240683
(43) Veröffentlichungstag der Anmeldung: 13.07.2005
(73) Patentinhaber: Schaffner, Alfred, 6805 Mezzovico (CH)
(72) Erfinder: Schaffner, Alfred, 6805 Mezzovico (CH)
(74) Vertreter: Ebert, Jutta
(86) Internationale Anmeldenummer: PCT/EP2003/009741
(87) Internationale Veröffentlichungsnummer: WO 2004/021919

(56) Entgegenhaltungen:
- DE-C- 645 966

## Beschreibung

Die Erfindung bezieht sich auf einen zahnärztlichen Matrizenspanner als Hilfsmittel bei der Verfüllung zweiflächiger Backenzahnausnehmungen mit einem Matrizenhalter und einer Vorrichtung zum Spannen eines in Form einer Öse um den zu behandelnden Zahn gelegten Matrizenbandes, wobei der Matrizenhalter aus einem Gehäuse mit einer kreisrunden Öffnung und einem in dieser Öffnung drehbaren und mit einem Spalt versehenen, spindelartigen Innenkörper besteht, dessen Spalt auf einen Schlitz in der Wand des Gehäuses ausrichtbar ist, so dass das Matrizenband mit seinen aufeinander gelegten Enden in diesen Schlitz und den auf ihn ausgerichteten Spalt einschiebbar und durch Verdrehen des Innenkörpers am Zahn spannbar ist.

In der zahnärztlichen Praxis werden Matrizenspanner gebraucht, um ein Matrizenband, das um den zu füllenden Zahn eines Patienten gelegt wird, festzuziehen und so der anschließend in den ausgebohrten Zahn eingebrachten Füllung Form und Halt zu geben, bis das Material ausgehärtet ist.

Nach der EP 0 227 590 A1 besteht ein Matrizenspanner aus einer Hülse, in deren Hohlraum verschiebbar zwei keilförmige Platten als Klemmvorrichtung ragen. In gelöster Position, wenn die Platten größtenteils aus der Hülse herausragen, sind ihre einander gegenüberliegenden Flächen beabstandet, so dass die aufeinander gelegten Enden eines Matrizenbandes eingeschoben werden können. Wenn die so gebildete Öse des Matrizenbandes um den zu befüllenden Zahn gelegt ist, wird sie festgezogen, indem die Hülse von Hand in Richtung auf die Öse geschoben wird, wobei sich die Klemmplatten schließen und schließlich in der Hülse eingekeilt werden.

Nach der US-PS 3,829,975 sind die aneinander gelegten Enden eines Matrizenbandes zwischen zwei Platten gehalten, die fest miteinander zu verbinden sind und in eine separate Klemmvorrichtung eingeschoben und mit Hilfe eines speziellen Werkzeugs eingezogen werden können. An den Schmalseiten der Platten sind Sägezähne vorgesehen für den Eingriff einer an der Klemmvorrichtung befindlichen Klinke, die verhindern soll, dass das Matrizenband sich während der nachfolgenden Behandlung des Zahnes von selbst löst. Herstellung und Handhabung des Gerätes sind kompliziert und aufwendig. Die Platten mit den darin befestigten Enden des Matrizenbandes müssen in exakter Position zueinander verbunden werden, denn ihre Verzahnungen müssen genau aufeinander ausgerichtet sein, damit die an der Klemmvorrichtung vorgesehene Klinke in Eingriff kommen kann. Dies setzt eine hohe Präzision bei der Herstellung und beim Zusammenfügen der einzelnen Teile voraus.

In der US-PS 4,824,365 ist ein Matrizenband mit Spannvorrichtung beschrieben, die permanent miteinander verbunden bleiben. Die Spannvorrichtung besteht aus einem Ring aus einem dauerhaft verformbaren Material. In diesem Ring sind zwei einander gegenüberliegende Schlitze vorgesehen, durch die die Enden des Matrizenbandes geführt sind. In dem der Öse des Matrizenbandes abgewandten Schlitz des Spannrings sind die Matrizenenden mit diesem fest und dauerhaft verbunden. Wenn die Öse um den Zahn gelegt ist, erfolgt das Spannen durch seitliches Zusammendrücken und bleibende Verformung des Spannrings, bei der sein der Öse zugewandter Schlitz auf dem Matrizenband gleitet und so die Öse verengt. Das Matrizenband muss danach allein durch den Spannring und die durch seine Verformung aufgebrachte Spannung für die Dauer der weiteren Behandlung am Zahn gehalten werden. Ein wirklich sicherer Sitz ist damit nicht gewährleistet.

Allen diesen Matrizenspannern ist gemeinsam, dass der Spannvorgang durch Verschieben eines Spann- oder Klemmmittels auf dem Matrizenband erfolgt. Damit kann aber kein sicherer und ausreichend straffer Sitz des Matrizenbandes am Zahn gewährleistet werden. Außerdem ist bei einigen der Geräte nachteilig, dass der Zahnarzt beim Anlegen und Spannen des Matrizenbandes mit den Fingern seiner beiden Hände im Mund seines Patienten arbeiten muss und er sich dabei selbst die Sicht zur Kontrolle verstellt oder zumindest erschwert.

Der in der DE 197 38 189 A1 beschriebene Matrizenspanner ist zweiteilig aufgebaut und besteht aus einem Spannschlüssel und einem zangenförmigen Matrizenhalter, dessen Greifarme an ihren einen Enden gelenkig mit einem Steg und einer vorgebogenen Blattfeder verbunden sind, welche in entspanntem Zustand die Greifarme geöffnet hält. Eine Schraube ist mit dem Steg fest verbunden und ragt durch eine Öffnung in der Blattfeder. An ihrem freien Ende kann sie von dem Spannschlüssel ergriffen und verdreht werden, wodurch die Blattfeder gestaucht und die freien Enden der Greifarme, an denen zuvor ein Matrizenband fixiert wurde, in einer Zangenbewegung geschlossen werden. Der Spannschlüssel kann für die weitere Behandlung zunächst entfernt werden und kommt erst wieder für das Lösen des Matrizenhalters zum Einsatz. Da der Matrizenhalter lediglich eine Greifbewegung macht und keinen Zug auf das Matrizenband ausübt, muss dieses in genau passender Länge an den Enden der Greifarme fixiert werden, um einen Halt am Zahn zu erreichen. Ein wirklich ausreichend fester Sitz des Matrizenbandes am Zahn ist durch die Greifbewegung nicht gewährleistet.

Nach der EP 0 688 540 A1 besteht ein Matrizenspanner aus einem Ring, in dem koaxial und drehbar ein Stift angeordnet ist. Sowohl der Ring als auch der Stift sind mit einem Schlitz versehen, durch die die aufeinander gelegten Enden eines Matrizenbandes eingeführt werden. Durch Drehen des Stiftes wird das Matrizenband festgezogen. Die Handhabung des Gerätes ist wenig komfortabel und erfordert Geschick; der Zahnarzt muss beim Drehen des Stiftes auch hier gänzlich innerhalb des Mundes seines Patienten arbeiten, damit sich der den Stift umfassende Ring zuletzt in direkter und fester Anlage am Zahn befindet, wobei die punktförmige Anlage des Rings am Zahn ungünstig ist. Aus DE 641005 ist ein zahnärztliche Matrizenspanner nach dem oberbegriff des Anspruchs 1 bekannt.

Aufgabe der Erfindung ist es, einen Matrizenspanner zu schaffen, mit dem ein Matrizenband mit möglichst genau dosierbarem Zug um einen Zahn festgezogen werden kann, der sicher und komfortabel in der Handhabung ist und bei der weiteren zahnärztlichen Behandlung möglichst wenig störend oder hinderlich wirkt.

Dies wird bei einem Matrizenspanner der eingangs genannten Art dadurch erreicht, dass an dem aus der kreisrunden Öffnung des Gehäuses vorstehenden Ende der Spindel ein Zahnrad vorgesehen ist, welches mit einer Antriebsvorrichtung in Eingriff bringbar ist, die eine seitlich herausgeführte Antriebswelle aufweist.

Der seitlich herausgeführte Antrieb für das Verdrehen der Spindel erlaubt eine präzise Betätigung des Matrizenspanners außerhalb des Mundes. Der Zahnarzt muss nach dem Ansetzen des Matrizenspanners am Zahn für das Spannen nicht im Mund seines Patienten arbeiten und kann den Spannvorgang genau beobachten und kontrollieren.

Bevorzugt ist das Zahnrad am oberen Ende der Spindel ein Kronenzahnrad, das mit einem zur Antriebsvorrichtung gehörenden Antriebsritzel in Eingriff bringbar ist, welches über die seitlich herausgeführte Antriebswelle verdrehbar ist. Mit diesem Antrieb lässt sich das Matrizenband sehr präzise und mit genau dosierter Spannung am Zahn festziehen.

Die Antriebsvorrichtung für die Spindel besteht in ihrer einfachsten Ausführungsform nur aus der Antriebswelle, die an ihrem einen Ende das Antriebsritzel trägt, das mit dem Kronenzahnrad in Eingriff gebracht werden kann, so dass durch Drehen der Antriebswelle die Spindel im Gehäuse gedreht wird, um das Matrizenband zu spannen. Wenn das Antriebsritzel an seiner Stirnseite leicht angeschrägt ist, lässt es sich besser in das Kronenzahnrad einführen.

Nach einer vorteilhaften Weiterbildung der Antriebsvorrichtung ist die Antriebswelle mit Hilfe eines an ihrem dem Antriebsritzel entgegengesetzten Ende vorgesehenen Drehknopfs innerhalb einer rohrförmigen Hülse verdrehbar, von der unterhalb des Antriebsritzels eine Haltegabel nach vorn abragt, die unter einen am oberen Ende des Gehäuses des Matrizenhalters seitlich überstehenden Rand geschoben werden kann, wobei das Antriebsritzel mit dem Kronenzahnrad der Spindel in Eingriff kommt. Die Antriebsvorrichtung hat so während des Spannvorgangs einen besseren Halt am Matrizenhalter.

Sobald der Spannvorgang beendet ist, kann die Antriebsvorrichtung aus dem Eingriff gelöst und beiseite gelegt werden, so dass sie bei der weiteren zahnärztlichen Behandlung nicht störend im Wege ist.

Nach einer anderen Ausführungsform kann die Antriebsvorrichtung aus einer mit dem Zahnrad der Spindel in Eingriff stehenden Antriebsschnecke bestehen, welche über die seitlich herausgeführte Antriebswelle gedreht werden kann.

Der erfindungsgemäße Matrizenspanner kann preiswert aus Kunststoff und vorzugsweise als Einweg- oder Wegwerfartikel hergestellt werden, so dass allen hygienischen Anforderungen entsprochen ist; er erhält damit auch ein sehr leichtes Gewicht, was seine Anwendung für den Patienten und den Zahnarzt komfortabel macht. Denkbar ist aber auch, nur den Matrizenhalter als Wegwerfartikel und die Antriebsvorrichtung wiederverwendbar zu gestalten.

Die Erfindung wird im folgenden anhand der anhängenden Zeichnungen beispielhaft genauer beschrieben; es zeigen
- Fig. 1: eine erste bevorzugte Ausführungsform eines erfindungsgemäßen Matrizenspanners mit eingelegtem Matrizenband,
- Fig. 2: vergrößert das Kopfende des Matrizenspanners nach Fig. 1 ohne Matrizenband,
- Fig. 3: die Antriebsvorrichtung des Matrizenspanners nach Fig. 1,
- Fig. 4: eine transparente Vorderansicht des im Matrizenspanner nach Fig. 1 zur Anwendung kommenden Matrizenhalters im Eingriff mit der Antriebsvorrichtung,
- Fig. 5: eine perspektivische Ansicht des Antriebsritzels,
- Fig. 6a, 6b und 6c: die im Matrizenhalter gemäß Fig. 4 einge setzte Spindel in Seitenansicht, in Unteransicht und stilisierter Draufsicht und
- Fig. 7: eine zweite Ausführungsform des erfindungsgemäßen Matrizenspanners.

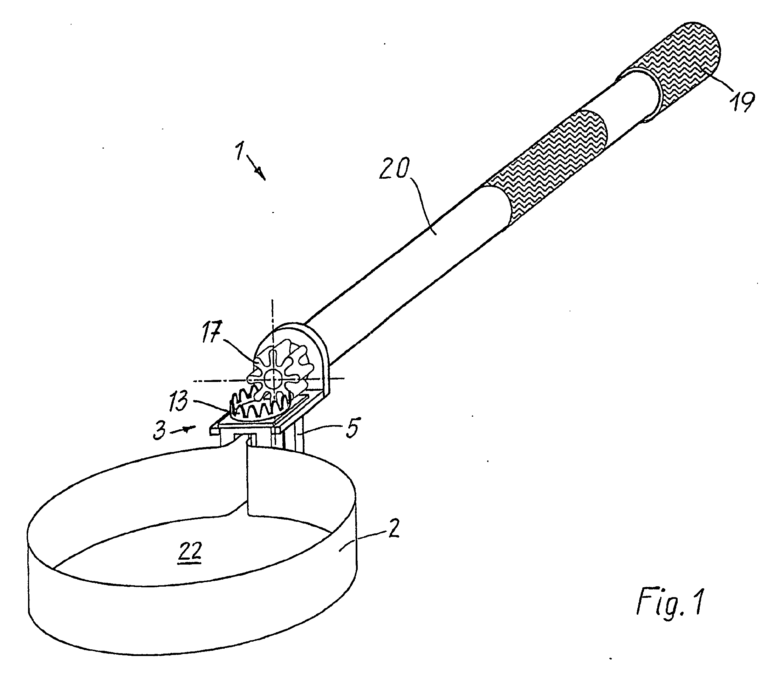

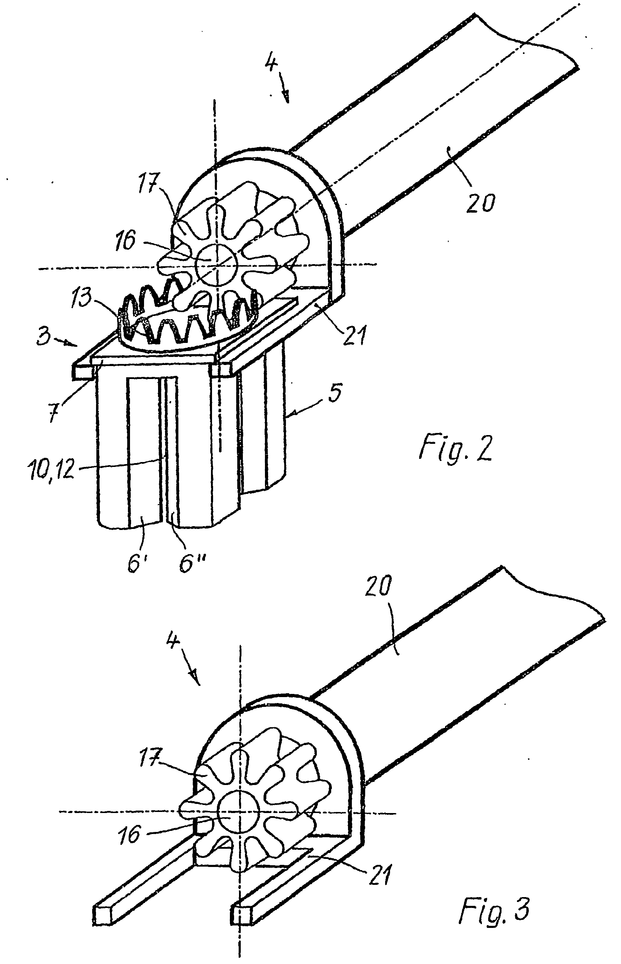

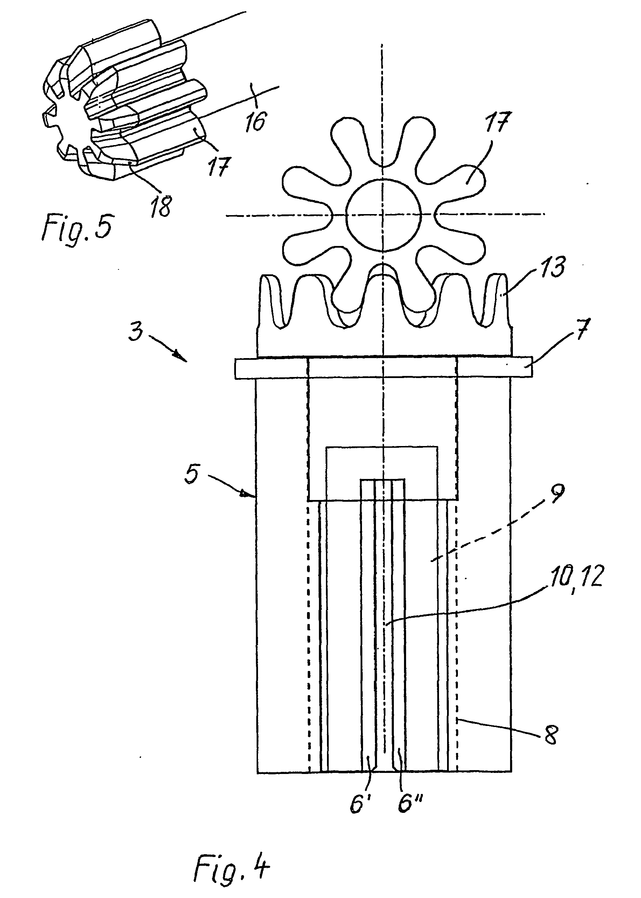

In Fig. 1 ist eine bevorzugte Ausführungsform des erfindungsgemäßen Matrizenspanners 1 mit eingelegtem Matrizenband 2 perspektivisch dargestellt. Fig. 2 zeigt vergrößert nochmals das Kopfende desselben Matrizenspanners 1 ohne Matrizenband. Er setzt sich im wesentlichen zusammen aus einem Matrizenhalter 3 (siehe auch Fig. 4) und einer Antriebsvorrichtung 4. Der Matrizenhalter 3 besteht, wie an sich bekannt, aus einem Gehäuse 5, das an seiner Frontfläche eine senkrecht verlaufende, vorzugsweise konkav gewölbte Anlagefläche 6 für einen Zahn aufweist; der Radius der Einwölbung ist entsprechend angepasst und kann dafür vorteilhaft ca. 2 mm betragen. Es hat sich gezeigt, dass es auch ausreichend ist, wenn die Anlagefläche 6 durch zwei aufeinander zulaufende Schrägen 6', 6" mit einer Tiefe von ca. 2 mm gebildet wird.

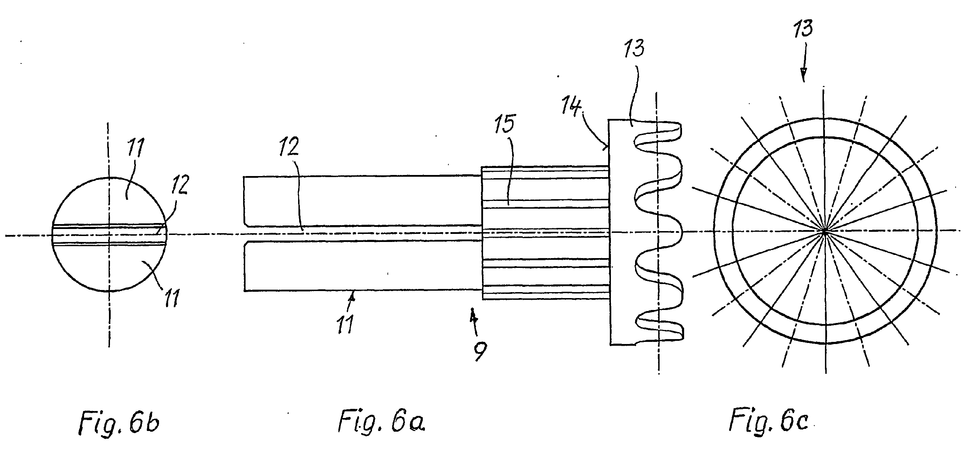

Das Gehäuse 5 weist an seinem oberen Ende einen allseits überstehenden Rand 7 auf und hat eine zentrale, senkrecht durchgehende, kreisrunde Öffnung 8, in die eine Spindel 9 (siehe Fig. 6a bis 6c) eingesetzt werden kann. In der Wand mit der Anlagefläche 6 und an der tiefsten Stelle der Anlagefläche 6 ist ein vertikaler, nach unten offener Schlitz 10 vorgesehen. Gemäß Fig. 6a bis 6c hat die Spindel 9 einen zylindrischen Grundkörper 11, der durch einen nach einer Seite offenen, tiefen Spalt 12 auf etwa 2/3 seiner Länge halbiert ist. An seinem von der Öffnung des Spaltes 12 abgewandten Ende trägt die Spindel 9 ein durch eine Stufe 14 abgesetztes Kronenzahnrad 13. Wenn die Spindel 9 in die kreisrunde Öffnung 8 des Gehäuses 5 eingesetzt ist, lässt sich ihr Spalt 12 auf den Schlitz 10 in der Gehäusewand ausrichten. Vorteilhaft kann ein Abschnitt der Spindel 9 zwischen dem Spalt 12 und dem Kronenzahnrad 13 mit einer Riffelung 15 versehen sein, die der Anpassung des Drehmoments dient, damit sich das Matrizenband 2 beim bestimmungsgemäßen Einsatz nicht lösen kann.

Die Antriebsvorrichtung 4 besteht zunächst in ihrer einfachsten Ausführungsform aus einer Antriebswelle 16, die an ihrem einen Ende ein Antriebsritzel 17 trägt, das mit dem Kronenzahnrad 13 der Spindel 9 in Eingriff gebracht werden kann. Vorzugsweise ist das Antriebsritzel 17 an seiner Stirnseite konisch abgeschrägt (siehe Fig. 5). Durch diese leichte Abschrägung 18 lässt sich das Antriebsritzel 17 besser in das Kronenzahnrad 13 einführen.

Nach der in den Figuren dargestellten vorteilhaften Weiterbildung ist die Antriebswelle 16 mit Hilfe eines an ihrem dem Antriebsritzel 17 entgegengesetzten Ende vorgesehenen Drehknopfs 19 innerhalb einer rohrförmigen Hülse 20 verdrehbar. Von dieser Hülse 20 ragt unterhalb des Antriebsritzels 17 eine Haltegabel 21 nach vorn ab, mit der die Antriebsvorrichtung 4 unter den Rand 7 des Gehäuses 5 des Matrizenhalters 3 geschoben werden kann, wobei das Antriebsritzel 17 in Eingriff gelangt mit dem Kronenzahnrad 13 der Spindel 9.

Um mit Hilfe des hier beschriebenen Matrizenspanners ein Matrizenband 2 mit ausreichender Spannung um einen zu behandelnden Zahn zu legen, werden die Enden des Matrizenbandes 2 in bekannter Weise aufeinander gelegt und gemeinsam durch den Schlitz 10 des Matrizenhalters und den auf den Schlitz 10 ausgerichteten Spalt 12 der Spindel 9 geschoben, wie aus Fig. 1 zu ersehen ist. Die auf den Schlitz 10 zulaufenden Schrägen 6', 6" der Anlagefläche 6 erleichtern das Einführen des Matrizenbandes 2. Das Matrizenband 2 formt dabei eine runde Öse 22, die über den betreffenden Zahn geschoben wird. Nun wird das Antriebsritzel 17 in das Kronenzahnrad 13 der Spindel 9 eingeführt und diese durch Drehen der Antriebswelle 16 im Gehäuse 5 um ihre eigene Achse gedreht. Dabei wird das Matrizenband 2 durch den Schlitz 10 und den Spalt 12 in das Spanngerät gezogen und um die Spindel 9 gewickelt, so dass sich die Öse 22 zusammenzieht und das Matrizenband 2 sich fest um den Zahn legt. Die Weite der Öse 22 bzw. die Spannung, mit der sich das Matrizenband 2 um den Zahn legt, ist dabei über die Betätigung der Antriebswelle 16 sehr genau kontrollierbar und einstellbar. Eine spontane Lockerung des Matrizenbandes 2 während der weiteren Behandlung ist nicht möglich, sie wird insbesondere durch die oben erwähnte Riffelung 15 an der Spindel 9 verhindert.

Nachdem das Matrizenband 2 um den Zahn festgezogen ist, kann die Antriebsvorrichtung 4 aus dem Eingriff mit dem Kronenzahnrad 13 gelöst und beiseite gelegt werden, so dass sie bei der weiteren Behandlung nicht störend wirkt. Im Mund des Patienten verbleibt dann für die Dauer der weiteren Behandlung nur der Matrizenhalter 3 samt Matrizenband 2.

Gehäuse 5 und Spindel 9 des Matrizenhalters 3 sind vorzugsweise als Einweg- oder Wegwerfartikel ausgebildet und werden nach der Behandlung zusammen mit dem Matrizenband 2 entsorgt. Die Antriebsvorrichtung 4 kann, wenn erwünscht, wiederverwendbar sein.

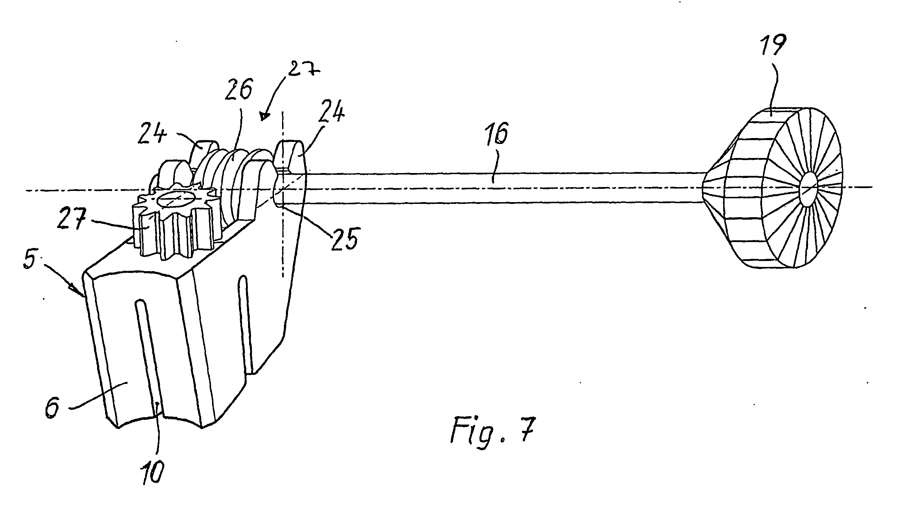

Fig. 7 zeigt eine Ausführungsform des Matrizenspanners 1, bei der die Antriebsvorrichtung 4 als Schneckenantrieb 23 ausgebildet ist. Auf der der Anlagefläche 6 entgegengesetzten Seite sind am Gehäuse 5 nach hinten und oben verlängerte, flügelartige Fortsätze 24 ausgebildet, in denen runde, nach oben offene Ausnehmungen 25 als Lager für die Antriebswelle 16 einer Antriebsschnecke 26 vorgesehen sind. Die Antriebsschnecke 26 kommt zwischen den an den Fortsätzen 24 ausgebildeten Lagern zu liegen und wird in Eingriff gebracht mit einem an der Spindel 9 angebrachten Zahnrad 27. Die Funktionsweise ist im übrigen dieselbe wie oben beschrieben.

### Bezugszeichenliste:

- 1: Matrizenspanner
- 2: Matrizenband
- 3: Matrizenhalter
- 4: Antriebsvorrichtung
- 5: Gehäuse
- 6: Anlagefläche
- 6', 6": Schrägen
- 7: Rand
- 8: Öffnung
- 9: Spindel
- 10: Schlitz
- 11: Grundkörper
- 12: Spalt
- 13: Kronenzahnrad
- 14: Stufe
- 15: Riffelung
- 16: Antriebswelle
- 17: Antriebsritzel
- 18: Abschrägung
- 19: Drehknopf
- 20: Hülse
- 21: Haltegabel
- 22: Öse
- 23: Schneckenantrieb
- 24: Fortsätze
- 25: Ausnehmungen
- 26: Antriebsschnecke
- 27: Zahnrad

## Patentansprüche

1. Zahnärztlicher Matrizenspanner als Hilfsmittel bei der Verfüllung zweiflächiger Backenzahnausnehmungen mit einem Matrizenhalter (3) und einer Antriebsvorrichtung (4) zum Spannen eines in Form einer Öse (22) um den zu behandelnden Zahn gelegten Matrizenbandes (2), wobei der Matrizenhalter (3) aus einem Gehäuse (5) mit einer kreisrunden Öffnung (8) und einem in dieser Öffnung (8) drehbaren und mit einem Spalt (12) versehenen Spindel (9) besteht, dessen Spalt (12) auf einen Schlitz (10) in der Wand des Gehäuses (5) ausrichtbar ist, so dass das Matrizenband (2) mit seinen aufeinander gelegten Enden in diesen Schlitz und den auf ihn ausgerichteten Spalt einschiebbar und durch Verdrehen des Innenkörpers am Zahn spannbar ist,
**dadurch gekennzeichnet,**
**dass** an dem aus der kreisrunden Öffnung (8) des Gehäuses (5) vorstehenden, oberen Ende der Spindel (9) ein Zahnrad (13, 27) vorgesehen ist, welches mit der Antriebsvorrichtung (4) in Eingriff bringbar ist, die eine seitlich herausgeführte Antriebswelle (16) aufweist.

2. Matrizenspanner nach Anspruch 1, **dadurch gekennzeichnet, dass** der Matrizenspanner zweiteilig aufgebaut ist und aus dem Matrizenhalter (3) und einer separaten, seitlich am Matrizenhalter (3) ansetzbaren und von ihm wieder lösbaren Antriebsvorrichtung (4) besteht, die eine seitlich abragende Antriebswelle (16) und ein am einen Ende dieser Antriebswelle (16) angeordnetes Antriebsritzel (17) umfasst, welches mit dem aus dem Gehäuse (5) des Matrizenhalters (3) nach oben herausragenden Zahnrad (13) der Spindel (9) in und außer Eingriff bringbar ist.

3. Matrizenspanner nach Anspruch 1, **dadurch gekennzeichnet, dass** das Zahnrad am oberen Ende der Spindel (9) ein Kronenzahnrad (13) ist, das mit einem zur Antriebsvorrichtung (4) gehörenden Antriebsritzel (17) in Eingriff bringbar ist, welches über die seitlich herausgeführte Anriebswelle (16) verdrehbar ist.

4. Matrizenspanner nach Anspruch 1, **dadurch gekennzeichnet, dass** die Antriebsvorrichtung (4) aus der Antriebswelle (16) und dem an ihrem einen Ende angeordneten Antriebsritzel (17) besteht.

5. Matrizenspanner nach Anspruch 2, **dadurch gekennzeichnet, dass** das Antriebsritzel (17) an seiner Stirnseite leicht angeschrägt ist.

6. Matrizenspanner nach Anspruch 1, **dadurch gekennzeichnet, dass** die Antriebswelle (16) mit Hilfe eines an ihrem dem Antriebsritzel (17) entgegengesetzten Ende vorgesehenen Drehknopfs (19) innerhalb einer rohrförmigen Hülse (20) verdrehbar ist, von der unterhalb des Antriebsritzels (17) eine Haltegabel (21) nach vorn abragt, die unter einen am oberen Ende des Gehäuses (5) seitlich überstehenden Rand (7) schiebbar ist.

7. Matrizenspanner nach Anspruch 1, **dadurch gekennzeichnet, dass** die Antriebsvorrichtung (4) aus einer mit dem Zahnrad (27) der Spindel (9) in Eingriff stehenden Antriebsschnecke (26) besteht, welche über eine seitlich herausgeführte Antriebswelle (16) verdrehbar ist.

## Claims

1. Dental matrix retainer used as an aid when filling two-surface cavities in the molars, with a matrix holder (3) and a drive device (4) for tensioning a matrix band (2) placed in the form of a loop (22) around the tooth which is to be treated, the matrix holder (3) being composed of a housing (5) with a circular opening (8), and of a spindle (9) which can turn in this opening (8) and which is provided with a gap (12), said gap (12) being able to be aligned with a slit (10) in the wall of the housing (5) such that the superposed ends of the matrix band (2) can be inserted into this slit and into the gap aligned therewith and can be tensioned on the tooth by turning the inner body, **characterized in that** a toothed wheel (13, 27) is provided on the upper end of the spindle (9) protruding from the circular opening (8) of the housing (5), said toothed wheel (13, 27) being able to be engaged with the drive device (4) which has a laterally outwardly extended drive shaft (16).

2. Matrix retainer according to Claim 1, **characterized in that** the matrix retainer is constructed in two parts and consists of the matrix holder (3) and of a separate drive device (4) which can be applied laterally on the matrix holder (3) and can be detached from it again and which comprises a laterally projecting drive shaft (16) and, arranged at the end of this drive shaft (16), a drive pinion (17) which can be brought into and out of engagement with the crown wheel (13) of the spindle (9) projecting upwards from the housing (5) of the matrix holder (3).

3. Matrix retainer according to Claim 1, **characterized in that** the toothed wheel at the upper end of the spindle (9) is a crown wheel (13) which can be brought into engagement with a drive pinion (17) belonging to the drive device (4), which drive pinion (17) can be turned via the laterally outwardly extended drive shaft (16).

4. Matrix retainer according to Claim 1, **characterized in that** the drive device (4) is composed of the drive shaft (16) and of the drive pinion (17) arranged at one end thereof.

5. Matrix retainer according to Claim 2, **characterized in that** the drive pinion (17) is slightly bevelled at its front face.

6. Matrix retainer according to Claim 1, **characterized in that** the drive shaft (16) can be turned inside a tubular sleeve (20) with the aid of a rotary knob (19) provided at its end remote from the drive pinion (17), from which sleeve (20) a support fork (21) protrudes forward underneath the drive pinion (17) and can slide under an edge (7) protruding laterally from the upper end of the housing (5).

7. Matrix retainer according to Claim 1, **characterized in that** the drive device (4) is composed of a drive worm (26) which engages with the toothed wheel (27) of the spindle (9) and which can be turned via a laterally outwardly extended drive shaft (16).

## Revendications

1. Dispositif de serrage de matrice dentaire servant d'aide pour le remplissage de cavités dièdres dans des molaires, comprenant un porte-matrice (3) et un dispositif d'entraînement (4) pour serrer une bande-matrice (2) placée en forme d'oeillet (22) autour de la dent à traiter, le porte-matrice (3) se composant d'un boîtier (5) avec une ouverture ronde circulaire (8) et d'une broche (9) pouvant tourner dans cette ouverture (8) et pourvue d'un interstice (12), cet interstice (12) pauvant être aligné avec une fente (10) dans la paroi du boîtier (5), de sorte que la bande-matrice (2) puisse être insérée avec ses extrémités placées l'une sur l'autre dans cette fente et dans l'interstice aligné avec elle et puisse être serrée sur la dent par rotation de la broche,
**caractérisé en ce que**
l'on prévoit une roue dentée (13, 27) à l'extrémité supérieure de la broche (9) dépassant de l'ouverture ronde circulaire (8) du boîtier (5), laquelle peut être amenée en prise avec le dispositif d'entraînement (4) qui présente un arbre d'entraînement (16) ressorti latéralement.

2. Dispositif de serrage de matrice selon la revendication 1, **caractérisé en ce que** le dispositif de serrage de matrice est construit en deux parties et se compose du porte-matrice (3) et d'un dispositif d'entraînement (4) séparé, pouvant être appliqué latéralement sur le porte-matrice (3) et pouvant à nouveau en être détaché, lequel comprend un arbre d'entraînement dépassant latéralement (16) et un pignon d'entraînement (17) disposé à une extrémité de cet arbre d'entraînement (16), lequel peut être amené en et hors d'engagement avec la roue dentée (13) de la broche (9) dépassant vers le haut hors du boîtier (5) du porte-matrice (3).

3. Dispositif de serrage de matrice selon la revendication 1, **caractérisé en ce que** la roue dentée à l'extrémité supérieure de la broche (9) est une couronne dentée (13), qui peut être amenée en prise avec un pignon d'entraînement (17) appartenant au dispositif d'entraînement (4), lequel peut tourner par le biais de l'arbre d'entraînement (16) ressorti latéralement.

4. Dispositif de serrage de matrice selon la revendication 1, **caractérisé en ce que** le dispositif d'entraînement (4) se compose de l'arbre d'entraînement (16) et du pignon d'entraînement (17) disposé sur l'une de ses extrémités.

5. Dispositif de serrage de matrice selon la revendication 2, **caractérisé en ce que** le pignon d'entraînement (17) est légèrement biseauté au niveau d'un côté frontal.

6. Dispositif de serrage de matrice selon la revendication 1, **caractérisé en ce que** l'arbre d'entraînement (16) peut tourner, à l'aide d'un bouton tournant (19) prévu sur l'extrémité opposée au pignon d'entraînement (17), à l'intérieur d'un manchon tubulaire (20), depuis lequel une fourche de maintien (21) dépasse vers l'avant en dessous du pignon d'entraînement (17), laquelle peut être poussée sous un bord (7) dépassant latéralement à l'extrémité supérieure du boîtier (5).

7. Dispositif de serrage de matrice selon la revendication 1, **caractérisé en ce que** le dispositif d'entraînement (4) se compose d'une vis sans fin d'entraînement (26) en prise avec la roue dentée (27) de la broche (9), qui peut tourner par le biais d'un arbre d'entraînement (16) ressorti latéralement.
